# EUROPEAN PATENT APPLICATION

(11) **EP 4 611 143 A1**
(43) Date of publication of application: **03.09.2025**
(21) Application number: 23894975.4
(22) Date of filing: 20.11.2023
(51) Int. Cl.: H01M 50/24, H01M 10/658, H01M 50/231, H01M 50/233, H01M 50/209, H01M 50/249

(54) **BATTERY MODULE TO WHICH FLAME RETARDANT COVER IS ATTACHED**

(30) Priority: 21.11.2022 KR 20220156382
(71) Applicant: LG Energy Solution, Ltd., Seoul 07335 (KR)
(72) Inventor: LEE, Junghoon, Daejeon 34122 (KR); JUNG, Hyemi, Daejeon 34122 (KR); PARK, Minsoo, Daejeon 34122 (KR); KIM, Kwangmo, Daejeon 34122 (KR); YUN, Hyun Seop, Daejeon 34122 (KR)
(74) Representative: Plasseraud IP
(86) International application number: PCT/KR2023/018710
(87) International publication number: WO 2024/112047

(57) **Abstract**

The present invention provides a structure of a battery module including: a battery cell laminate formed by stacking a plurality of pouch-type battery cells; a frame having open front and rear ends, and accommodates the battery cell laminate; a pair of end plates covering the front and rear ends of the frame; and a flame retardant cover attached to a predetermined area of a surface of the frame, wherein the predetermined area is divided into a plurality of areas, the flame retardant cover includes a plurality of divided covers attached to cover the plurality of areas, respectively, and the frame includes: an upper surface having two or more divided covers attached thereto; and two side surfaces having two or more divided covers attached thereto, respectively.

## Description

### [TECHNICAL FIELD]

This application claims the benefit of priority based on Korean Patent Application No. 10-2022-0156382 filed on November 21, 2022, entire content disclosed in the document of the patent applications is included as a part of this specification.

The present invention relates to a battery module including a plurality of pouch-type battery cells capable of delaying or preventing heat propagation.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium to large-sized battery modules.

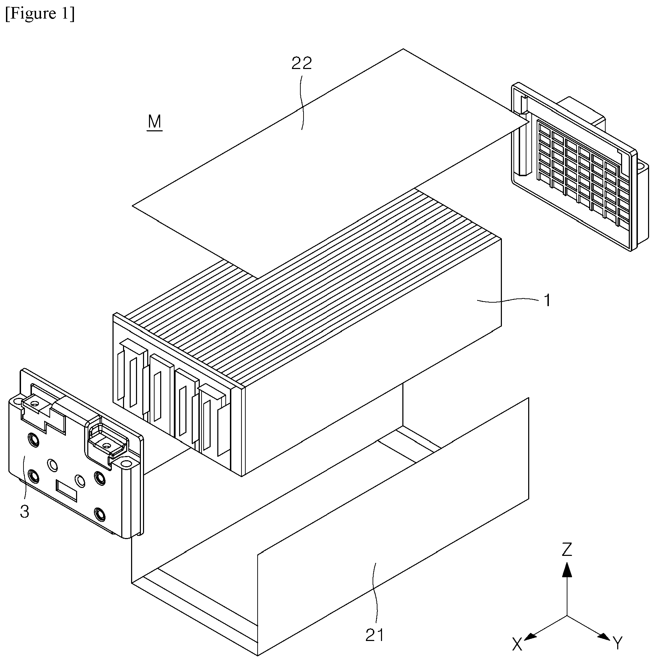

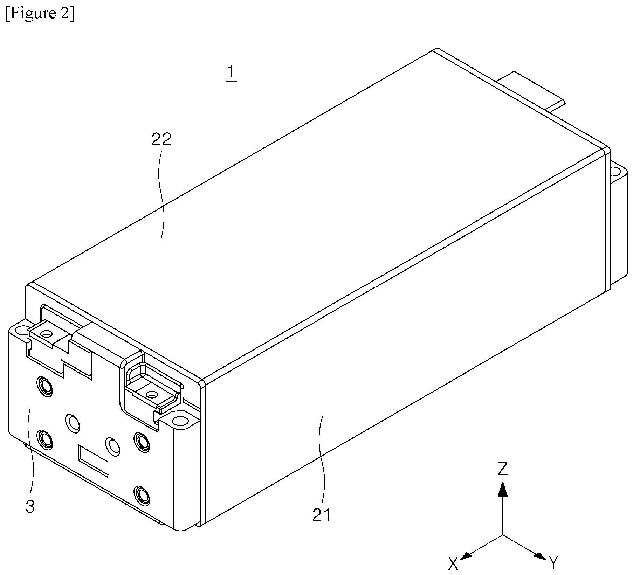

FIGS. 1 and 2 are an exploded perspective view and a perspective view, respectively, illustrating a structure of a general battery module. Referring to FIGS. 1 and 2, a general battery module includes a battery cell laminate 1 formed by stacking a plurality of pouch-type battery cells, a frame 2 with open front and rear ends and accommodating the battery cell laminate 1, and a pair of end plates 3 covering the front and rear ends of the frame 2, respectively. The frame 2 may include a U frame 21 with open upper end and open front and rear ends, and a top plate 22 covering the upper end of the U frame 21.

Meanwhile, the battery cell has a risk of ignition or thermal runaway due to a short circuit or shock. In the event of thermal runaway, heat energy and gas are generated from the battery cell. The heat energy and gas can increase the internal pressure of the frame 2 and cause serial ignition in neighboring battery cells, resulting in an explosion of the battery module M.

Furthermore, a plurality of battery modules may be connected to one another in series or parallel to form a battery pack. The heat energy and gas are discharged from one battery module and the heat energy is propagated to neighboring battery modules, causing serial ignition and a larger explosion.

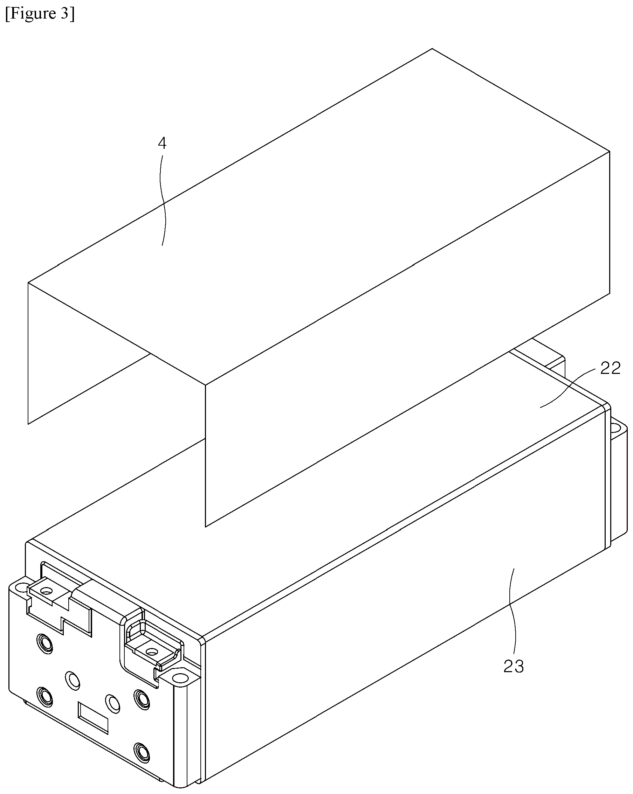

In order to prevent heat propagation due caused by thermal runaway described above, a flame retardant cover may be attached to the frame 2. FIG. 3 is a perspective view illustrating a structure of a battery module having a flame retardant cover attached thereto. Referring to FIG. 3, a flame retardant cover 4 may be attached to the surface of the frame 2. The flame retardant cover 4 prevents heat energy from neighboring battery modules from flowing into the battery module M, and thus has the effect of delaying thermal runaway and heat propagation. However, the flame retardant cover has problem of being deformed or detached easily caused by an increase in the internal pressure of the battery module. For example, when the pressure around one portion of the flame retardant cover suddenly increases, the entire flame retardant cover may be deformed by being lifted from the frame and crumpled, thereby losing the function thereof. In addition, the flame retardant cover has disadvantage of increasing the risk of explosion of the battery module caused by an increase in internal pressure as it becomes difficult to discharge gas generated inside the frame.

### [DISCLOSURE]

### [TECHNICAL PROBLEM]

In order to solve above-described problems of prior art, it is object of the present invention to provide a structure of a battery module wherein heat energy, gas and flame generated during ignition of the battery module is effectively discharged while preventing inflow of the same.

It is another object of the present invention to provide a structure of a battery module to which a flame retardant cover is attached but not easily deformed or detached.

It is another object of the present invention to provide a structure of a battery module capable of suppressing structural deformation or destruction of the battery module itself such as the frame during ignition.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a battery module including: a battery cell laminate formed by stacking a plurality of pouch-type battery cells; a frame having open front and rear ends, and accommodates the battery cell laminate; a pair of end plates covering the front and rear ends of the frame; and a flame retardant cover attached to a predetermined area of a surface of the frame, wherein the predetermined area is divided into a plurality of areas, the flame retardant cover includes a plurality of divided covers attached to cover the plurality of areas, respectively.

The flame retardant cover may include a material with flame retardant and insulating properties. The flame retardant cover is attached to the surface of the frame to prevent heat propagation between battery modules and to prevent the inflow of flame and gas from one battery module to another battery module.

The flame retardant cover may include a flexible body. Preferably, the flame retardant cover may include a sheet or film. For example, the flame retardant cover may include a flexible sheet material with flame retardant and insulating properties, and an adhesive surface provided on one side surface thereof may be attached to the surface of the frame. Alternatively, the flame retardant cover may be attached to the surface of the frame with adhesive or adhesive tape interposed between the flame retardant cover and the surface of the frame.

The predetermined area may include any area on the surface of the frame where the propagation of heat from other battery modules should be prevented. For example, the predetermined area may include the upper surface and two side surfaces of the frame. Since heat energy and gas generated from the battery module mainly gather in the upper portion of the battery pack, heat propagation may be delayed by covering the upper surface of the frame with the flame retardant cover. Additionally, in the battery pack, since the battery modules are arranged side to side and adjacent to each other, it may be useful to cover the side surfaces of the frame to block heat from conducting between the battery modules.

Two or more divided covers may be attached to the upper surface and two side surfaces of the frame, respectively. For example, according to the first embodiment of the present invention, the plurality of areas may be obtained by dividing each of three sides including the upper surface and two side surfaces of the frame into three equal parts along the lengthwise direction, and a total of nine divided covers may be attached to a total of nine areas, respectively. The frame may be damaged or deformed due to high-temperature heat and flame generated when the battery module ignites. When the frame is damaged, gas and heat energy inside the frame may be discharged through the damaged portion. Here, when a single flame retardant cover is attached to cover the entire frame, the entire flame retardant cover may be lifted or detached. However, in the battery module according to the present invention, when the divided cover in one of plurality of areas is lifted or detached due to damage or deformation, other divided covers remains attached to the plurality of areas other than the one of plurality of areas.

According to the second embodiment of the present invention, the frame may include a U frame with open front and rear ends and an open upper end, and a top plate covering the upper end of the U frame. Here, the top plate and the U frame may be bonded to each other at two widthwise ends thereof. When the battery module ignites and the internal pressure of the frame increases, the bonding area of the top plate and the U frame may be vulnerable to deformation, and there is a risk of the disengagement. When the top plate and the U frame are detached from each other, it is dangerous because external heat energy, flame and gas may flow into the frame.

Here, according to the second embodiment of the present invention, the plurality of areas may include a plurality of divided edge areas, respectively, provided over a portion of the surface of the U frame and a portion of the surface of the top plate. The plurality of divided covers may include a plurality of divided edge covers, respectively, attached to the plurality of edge areas. Each of the plurality of divided edge covers covers a portion of the bonding area of the top plate and the U frame and may be attached to the top plate and the U frame simultaneously. As a result, the possibility of deformation and disengagement of the top plate and the U frame may be reduced, and even when the top plate and the U frame are disengaged, the possibility of heat energy and gas flowing thereinto may be reduced. Particularly, it is preferable that the two widthwise boundaries between the U frame and the top plate are covered by the plurality of divided edge covers over the entire length thereof.

The frame may include a venting hole connecting the inside and outside of the frame. The venting hole may be provided at the top plate penetrating the top plate vertically, and may be provided in plurality. Gas generated during the ignition of the battery module may be discharged to the outside of the frame through the venting hole. However, there is a possibility that external heat energy and gas may flow into the battery module through the venting hole.

Accordingly, according to the third embodiment of the present invention, the predetermined area may include an area where the venting hole is provided. Here, the plurality of divided areas includes a plurality of divided hole areas where the venting hole is provided, respectively. The venting hole may be provided at any one of the plurality of divided hole areas, and the plurality of divided cover may include a plurality of divided hole covers attached to the plurality of divided hole areas, respectively. Here, it is preferable that the venting holes are further provided in different divided hole areas. Even when the divided hole cover closest to one the venting holes where ignition occurs may be lifted or detached from the surface of the frame to discharge gas, the divided hole covers that remain attached to the divided hole areas may prevent external heat energy and gas from flowing through the venting hole.

The present invention also provides a battery pack including the battery module and a structure of a vehicle including the battery pack. A plurality of the battery modules may be integrated and built into a single pack frame to form a battery pack, and the battery pack may be built into and power the vehicle V as a power source.

### [ADVANTTAGEOUS EFFECTS]

The present invention may provide a structure of a battery module capable of preventing heat energy, gas and flame from neighboring battery cells from flowing through the upper surface side surfaces of the frame by a flame retardant cover.

The present invention also provides a structure of a battery module having a flame retardant cover including a plurality of divided covers wherein, even when one divided cover is detached or deformed, other divided covers remain attached, and external gas and heat energy are prevented from entering through portions where the divided covers remain attached while gas and heat energy are discharged through where detached or deformed divided cover is attached.

The present invention is advantageous in that a plurality of divided edge covers allows more firm bonding between the top plate and U frame and prevents unintentional venting, and a plurality of divided hole covers allows maintaining the attachment of the divided covers except that of the area where venting occurs.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 are an exploded perspective view and a perspective view, respectively, illustrating a structure of a general battery module.
FIG. 3 is a perspective view illustrating a structure of a battery module having a flame retardant cover attached thereto.
FIG. 4 illustrates a battery module and divided areas according to a first embodiment of the present invention.
FIGS. 5 and 6 are an exploded perspective view and a perspective view, respectively, illustrating a structure of a battery module having a plurality of divided covers attached thereto according to the first embodiment of the present invention.
FIG. 7 is a longitudinal cross-sectional view illustrating gas being discharged from a battery module according to the first embodiment of the present invention.
FIG. 8 illustrates a battery module and divided edge areas according to a second embodiment of the present invention.
FIGS. 9 and 10 are an exploded perspective view and a perspective view, respectively, illustrating a structure of a battery module having divided edge covers attached thereto according to a second embodiment of the present invention.
FIG. 11 is a longitudinal cross-sectional view illustrating gas discharged from a battery module according to the second embodiment of the present invention.
FIG. 12 is a perspective view illustrating a structure of a battery module provided with venting holes.
FIG. 13 is a longitudinal cross-sectional view illustrating gas discharged from and flowing into the battery module of FIG. 12.
FIG. 14 illustrates a battery module and divided hole areas according to a third embodiment of the present invention.
FIGS. 15 and 16 are an exploded perspective view and a perspective view, respectively, illustrating a structure of a battery module having a plurality of divided hole covers attached thereto according to the third embodiment of the present invention.
FIG. 17 is a longitudinal cross-sectional view illustrating gas discharged from a battery module according to the third embodiment of the present invention.
FIG. 18 is a perspective view illustrating the structure of a battery pack containing a battery module according to the present invention, and FIG. 19 is a perspective view illustrating a structure of a vehicle containing the battery pack of FIG. 18.

### [DESCRIPTION OF REFERENCE NUMERALS]

M: battery module
1: battery cell laminate
2: frame
   21: U frame
   22: top plate
   23: damaged portion
   24: venting hole
   25: divided area
      25E: divided edge area
      25H: divided hole area
3: end plate
4: flame retardant cover
   41: divided cover
   41E: divided edge cover
   41H: divided hole cover
P: battery pack
V: vehicle
X: lengthwise direction
Y: widthwise direction
Z: heightwise direction

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "includes" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "includes" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

First, a structure of a general battery module will be described with reference to the drawings.

FIGS. 1 and 2 are an exploded perspective view and a perspective view, respectively, illustrating a structure of a general battery module. Referring to FIGS. 1 and 2, a general battery module includes a battery cell laminate 1 formed by stacking a plurality of pouch-type battery cells, a frame 2 with open front and rear ends and accommodating the battery cell laminate 1, and a pair of end plates 3 covering the front and rear ends of the frame 2, respectively. The frame 2 may include a U frame 21 with open upper end and open front and rear ends, and a top plate 22 covering the upper end of the U frame 21. However, ii is not necessary that the frame 2 includes the U frame 21 and the top plate 22, and may be of any shape as long as the open front and rear ends are provided.

The present invention provides a structure of a battery module including a flame retardant cover attached to a predetermined area of the surface of the frame, wherein the predetermined area is divided into a plurality of areas, and the flame retardant cover includes a plurality of divided cover attached to and covers the plurality of areas, respectively.

Hereinafter, a preferred embodiment of the present invention will be described with reference to the accompanying drawings.

### [FIRST EMBODIMENT]

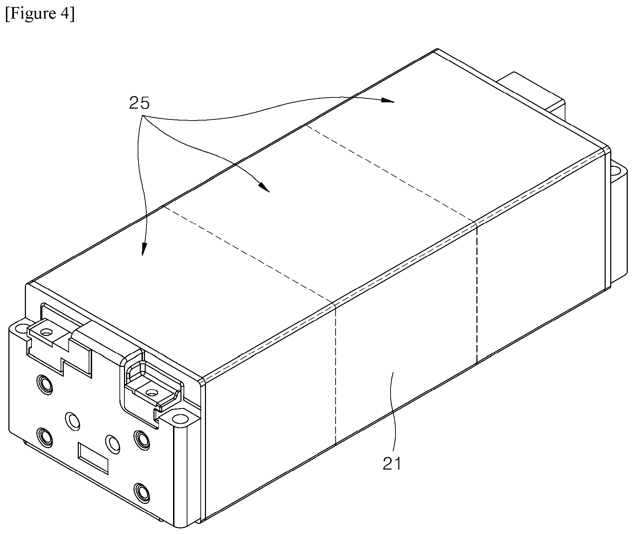

FIG. 4 illustrates a battery module and divided areas according to a first embodiment of the present invention. Referring to FIG. 4, the surface of the frame 2 of the battery module may include a predetermined area where a flame retardant cover is attached. The predetermined area may include at least a portion of the upper surface and at least portions of two side surfaces of the frame 2. Preferably, the predetermined area may include the entire upper surface and the entire two side surfaces of the frame 2. Since heat energy and gas generated from the battery module mainly gather in the upper portion of the battery pack, heat propagation may be delayed by covering the upper surface of the frame 2 with the flame retardant cover. Additionally, in the battery pack, since the battery modules are arranged side to side and adjacent to each other, it may be useful to cover the side surfaces of the frame 2 to block heat from conducting between the battery modules. The predetermined area may be divided into a plurality of areas 25.

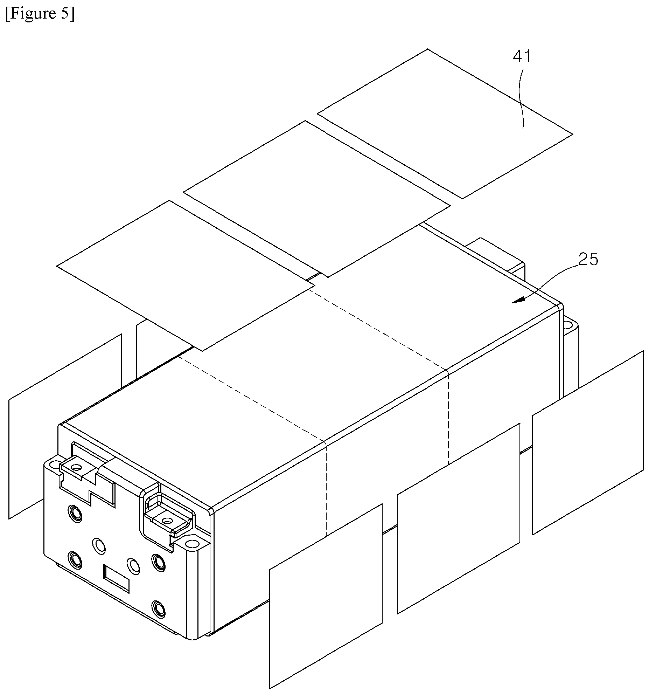

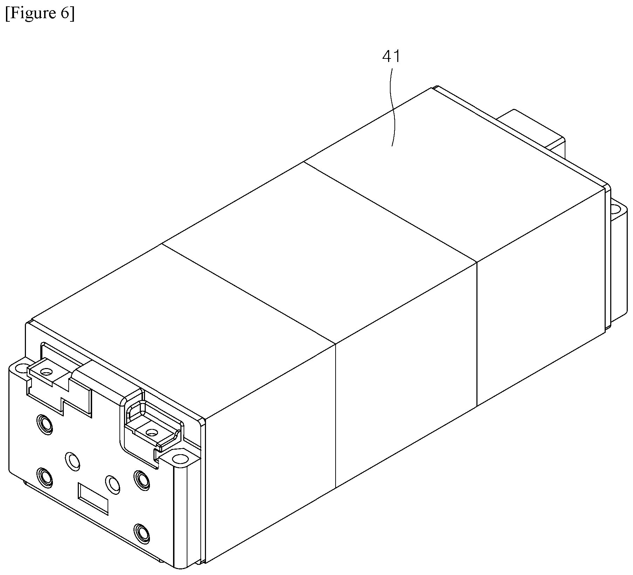

In the first embodiment, the predetermined area may be divided into a total of nine areas 25 formed by dividing each of three sides of the frame including the upper surface and two side surfaces into 3 equal areas along a lengthwise direction
FIGS. 5 and 6 are an exploded perspective view and a perspective view, respectively, illustrating a structure of a battery module having a plurality of divided covers attached thereto according to the first embodiment of the present invention. Referring to FIGS. 5 and 6, a flame retardant cover may be attached to the predetermined area, and the flame retardant cover may include a plurality of divided covers 41 attached to cover the plurality of divided areas 25, respectively.

The flame retardant cover may include a material with flame retardant and insulating properties. For example, the flame retardant cover may be made of a synthetic resin material with flame retardant and insulating properties. By attaching the flame retardant cover to the surfaces of the frame 2, when the battery module ignites, heat propagation to neighboring battery modules may be delayed or prevented, and ignition of other battery modules adjacent to the battery module may be prevented. As a result, heat energy, gas, and flame discharged from other battery modules may be prevented from flowing into the battery module.

The flame retardant cover may include a flexible body. Preferably, the flame retardant cover may include a flexible sheet material. The flame retardant cover may be attached to the surfaces of the frame 2 using adhesive tape and/or adhesive. However, it is irrelevant how the flame retardant cover is attached as long as the flame retardant cover is attached to the surface of the frame 2. Preferably, the flame retardant cover may include a sheet or film. For example, the flame retardant cover may include a flexible sheet material with flame retardant and insulating properties provided with one adhesive surface attached to the surfaces of the frame 2. Alternatively, the flame retardant cover may be attached to the surface of the frame 2 with adhesive or adhesive tape therebetween.

In the first embodiment, the flame retardant cover may be include a sheet of synthetic resin material with flame retardant and insulating properties, and attached to the surface of the frame 2 with an adhesive tape therebetween. Here, the flame retardant cover may include a plurality of divided covers 41 attached to plurality of areas 25, respectively, provided on the upper surface and two side surfaces of the frame 2.

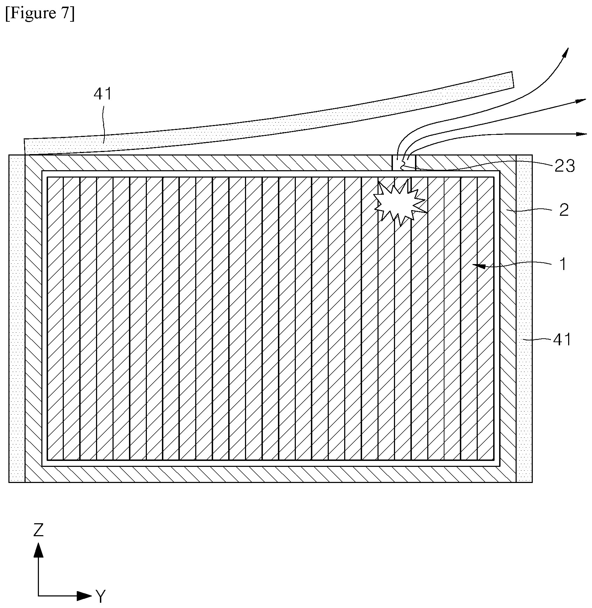

FIG. 7 is a longitudinal cross-sectional view illustrating gas being discharged from a battery module according to the first embodiment of the present invention. Referring to FIG. 7, the battery cell laminate 1 may ignite due to various causes such as short circuit or shock. When the battery cell laminate 1 ignites, internal temperature and internal pressure of the frame 2 become high, and the frame 2 may be deformed and/or damaged by such high temperature and pressure. Due to deformation of the frame 2 or discharge of gas of high temperature and pressure through the damaged portion 23 of the frame 2, the flame retardant cover may be deformed or detached from the surface of the frame 2. In such case, the flame retardant cover is unable to properly perform the function of delaying heat propagation and preventing gas and flame inflow.

Even when one of the plurality of divided covers 41 attached to the area where the frame 2 is deformed and/or damaged due to ignition is deformed or detached other divided covers 41 are still able to remain attached and perform the functions thereof as the flame retardant cover is divided into a plurality of covers 41.

In addition, at the same time, high-temperature gas in the frame 2 may be discharged through the damaged area 25, and as a result, the internal temperature and pressure of the frame 2 may be reduced, thereby delaying or preventing explosion of the battery module or serial ignition within the battery module.

In the first embodiment, each of the plurality of divided covers 41 includes a flexible sheet material such that only the minimum portion is lifted or detached even when the frame 2 is deformed and/or damaged, and other portions remain attached. Accordingly, the function of delaying heat propagation provided by the plurality of divided covers 41 may be maximized. In addition, the present invention according to the first embodiment is advantageous in that the divided cover 41 may be easily reattached after gas discharge is completed, thereby preventing additional heat propagation.

### [SECOND EMBODIMENT]

Referring back to FIG. 1, the frame 2 according to the second embodiment may include the U frame 21 and the top plate 22. Here, the top plate 22 and the U frame 21 may be bonded to each other at two widthwise ends thereof. When the battery module ignites and the internal pressure of the frame 2 increases, the bonding area of the top plate 22 and the U frame 21 may be vulnerable to deformation, and there is a risk of the disengagement. When the top plate 22 and the U frame 21 are detached from each other, it is dangerous because external heat energy, flame and gas may flow in through the open upper end of the frame 2.

Accordingly, the present invention according to the second embodiment provides a structure of a battery module including a plurality of divided edge covers that cover the bonding area of the top plate 22 and the U frame 21. Hereinafter, parts not separately described with respect to the second embodiment are the same as those in the first embodiment described above.

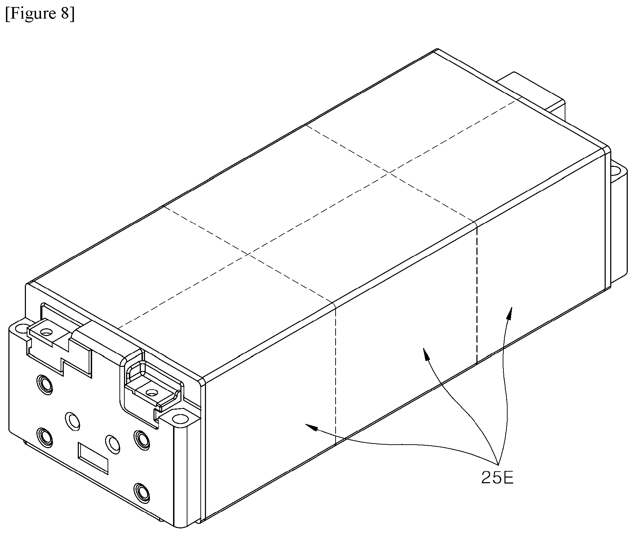

FIG. 8 illustrates a battery module and divided edge areas according to the second embodiment of the present invention. Referring to FIG. 8, each of the plurality of areas 25 may include a plurality of divided edge areas 25E, respectively, provided over portions of surfaces of the U frame 21 and the top plate 22.

According to the second embodiment, the plurality of areas 25 may include six divided edge areas 25E obtained by dividing the surfaces of the frame 2 into three equal parts along the lengthwise direction and into two equal parts along the widthwise direction. That is, each of the plurality of divided edge areas 25E according to the second embodiment is expanding over two adjacent continuous rectangular areas: one of which is one of the rectangular areas obtained by dividing the upper surface of the frame 2 into three equal parts in the lengthwise direction and two equal parts in the widthwise direction; and the other of which is one of the rectangular areas obtained by dividing one of the two side surfaces of the frame 2 into three equal parts in the lengthwise direction.

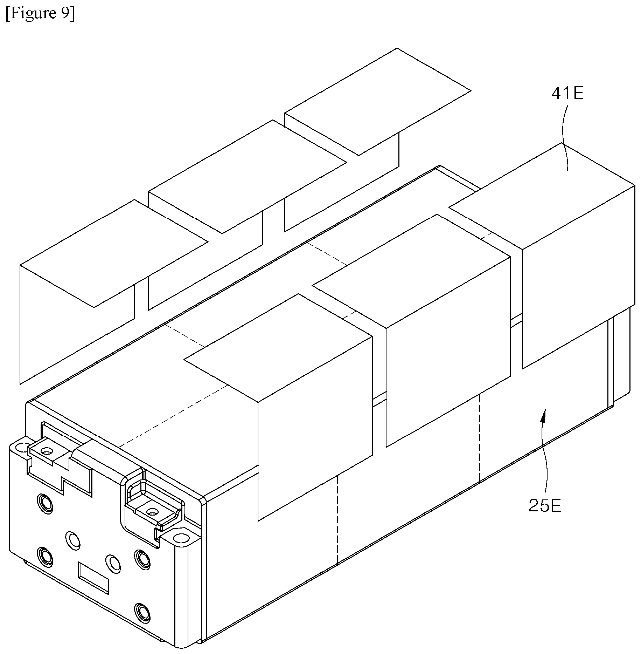

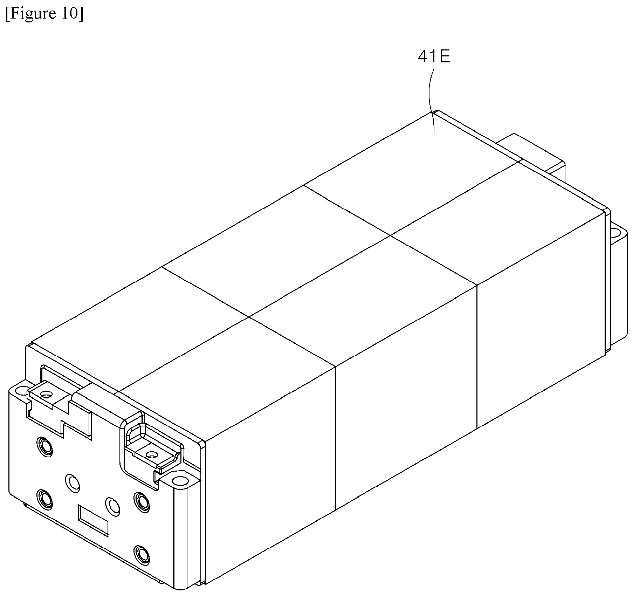

FIGS. 9 and 10 are an exploded perspective view and a perspective view, respectively, illustrating a structure of a battery module having divided edge covers attached thereto according to the second embodiment of the present invention. Referring to FIGS. 9 and 10, the plurality of divided covers may include a plurality of divided edge covers 41E, respectively, attached to the plurality of divided edge areas 25E. Each of the plurality of divided edge covers 41E covers a portion of the bonding area of the top plate 22 and the U frame 21 and may be attached to the top plate 22 and the U frame 21 simultaneously. As a result, the possibility of deformation and disengagement of the top plate 22 and the U frame 21 may be reduced, and even when the top plate 22 and the U frame 21 are disengaged, the possibility of heat energy, gas and flame flowing thereinto may be reduced. Here, it is preferable that the two widthwise boundaries between the U frame 21 and the top plate 22 are covered by the plurality of divided edge covers 41E over the entire length thereof.

According to the second embodiment, each of the six divided edge areas 25E may be covered by six divided edge covers 41E, respectively, and as a result, the possibility of disengagement of the top plate 22 and the U frame 21 and the possibility of heat energy, gas and flame flowing into the space between the top plate 22 and the U frame 21 may be reduced.

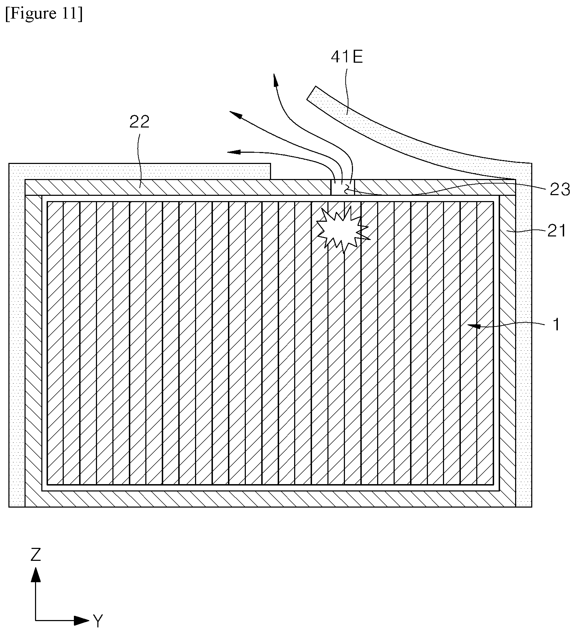

FIG. 11 is a longitudinal cross-sectional view illustrating gas discharged from a battery module according to the second embodiment of the present invention. Referring to FIG. 11, according to the second embodiment, even when the battery cell laminate 1 ignites and the frame 2 is deformed or damaged, only a portion of the divided edge cover 41E corresponding to the damaged portion 23 of the frame 2 is detached owing to flexibility of sheet material thereof such that the gas inside the frame 2 is discharged to the outside through the damaged portion 23 of the frame 2 and the detached portion of the divided edge cover 41E. Here, since the plurality of divided edge covers 41E still cover the bonding area, the risk of the top plate 22 and the U frame 21 being disengaged from each other is reduced. Even when the top plate 22 and the U frames 21 are disengaged from each other, it is difficult for heat energy, gas, and flame to flow in from the outside through the bonding area.

### [THIRD EMBODIMENT]

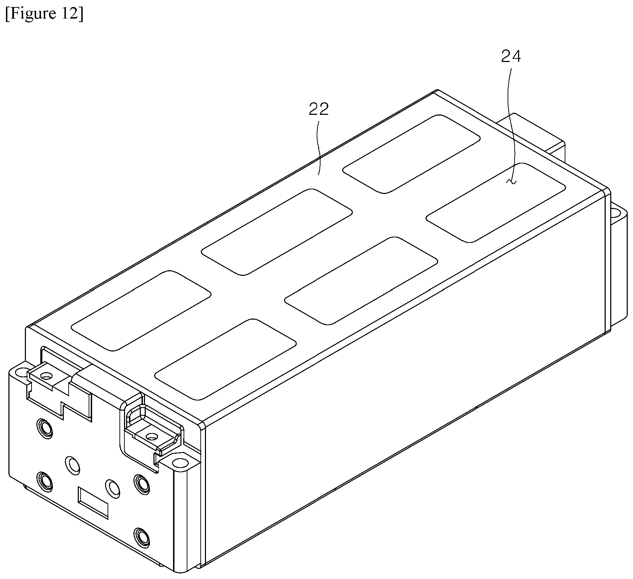

FIG. 12 is a perspective view illustrating a structure of a battery module provided with venting holes. Referring to FIG. 12, the frame 2 may be provided with a venting hole 24 connecting inside and outside of the frame. A plurality of venting holes 24 may be provided.

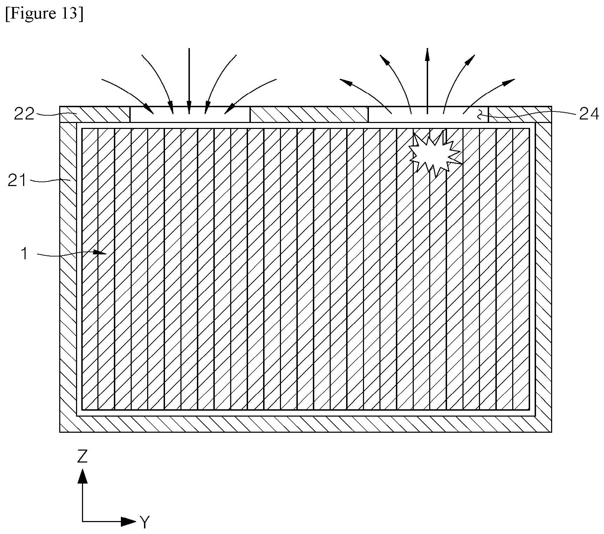

FIG. 13 is a longitudinal cross-sectional view illustrating gas discharged from and flowing into the battery module of FIG. 12. Referring to FIG. 13, the gas generated due to the ignition of the battery cell laminate 1 may be discharged through the venting hole 24. As a result, the internal pressure and internal temperature of the frame 2 are lowered. However, when the venting hole 24 is exposed to the outside, there is a possibility that gas, flame and heat energy discharged from other battery modules may flow into the battery module through the venting hole.

Accordingly, the present invention according to the third embodiment provides a structure of a battery module including a plurality of divided hole covers covering the venting hole. Hereinafter, parts not separately described with respect to the third embodiment are the same as those in the first and second embodiments described above.

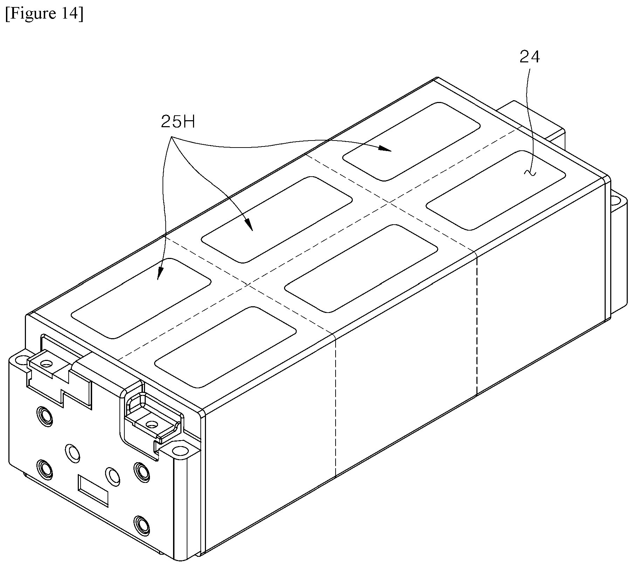

FIG. 14 illustrates a battery module and divided hole areas according to the third embodiment of the present invention. Referring to FIG. 14, the plurality of areas 25 may include a plurality of divided hole areas 25H provided with the venting holes 24. Each of the venting holes 24 may be provided in any one of the divided hole areas 25H, and the venting holes 24 may be further provided in different divided hole areas 25H.

In the third embodiment, the top plate 22 may be provided with a plurality of venting holes 24, and the plurality of venting holes 24 may be arranged in a grid shape on the top plate 22. Here, one venting hole 24 may be provided at each divided hole area 25H.

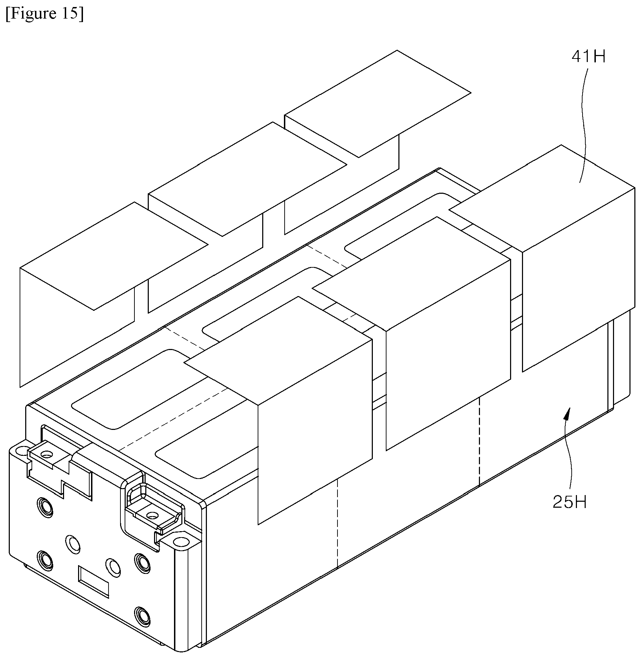

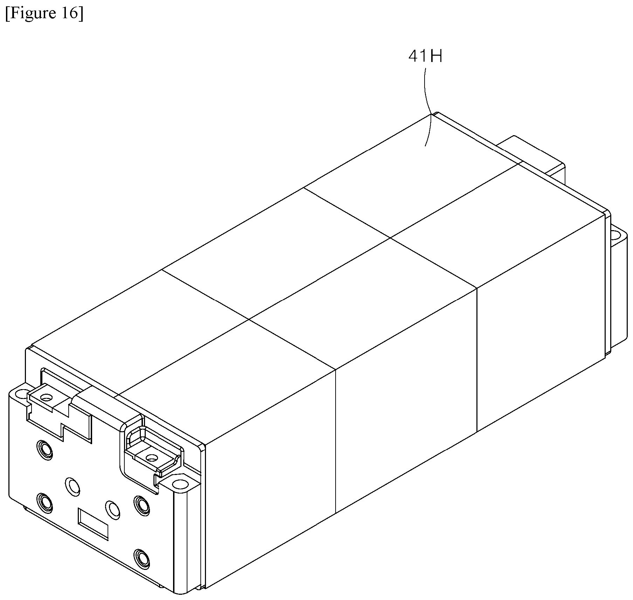

FIGS. 15 and 16 are an exploded perspective view and a perspective view, respectively, illustrating a structure of a battery module having a plurality of divided hole covers attached thereto according to the third embodiment of the present invention. Referring to FIGS. 15 and 16, the plurality of divided covers 41 may include a plurality of divided hole covers 41H, respectively, attached to cover the divided hole area 25H. The plurality of divided hole covers 41H may also correspond to the plurality of divided edge cover, respectively. Here, it is preferable that each of the plurality of venting holes 24 is covered by the plurality of divided hole cover 41H, respectively.

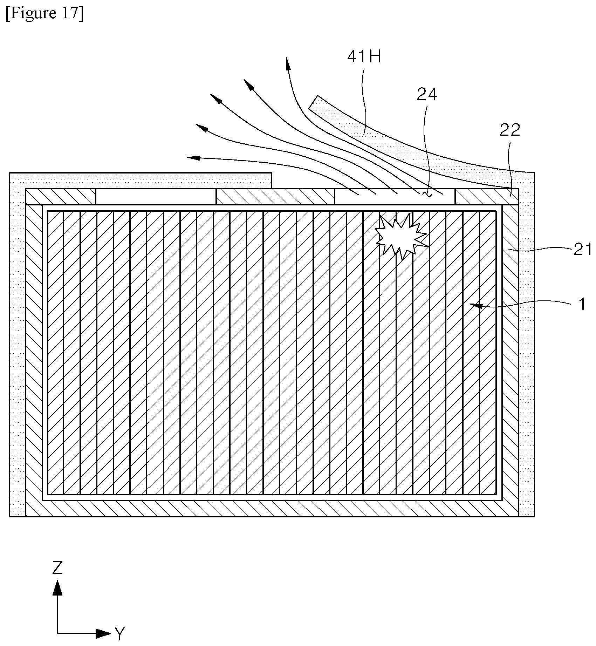

FIG. 17 is a longitudinal cross-sectional view illustrating gas discharged from a battery module according to the third embodiment of the present invention. Referring to FIG. 17, when the battery cell laminate 1 ignites causing high-temperature gas to be generated in the frame 2, a portion of the divided hole cover 41H is detached from the frame 2, and the gas may be discharged to the outside through the venting hole 24 and the portion where the divided hole cover 41H is detached. Here, since the divided hole covers 41H other than the detached divided hole cover 41H are still attached, the risk of external heat energy, gas and flame flowing in through the venting holes 24 is low.

The present invention provides a battery pack including the battery module and a structure of a vehicle with the battery pack built in.

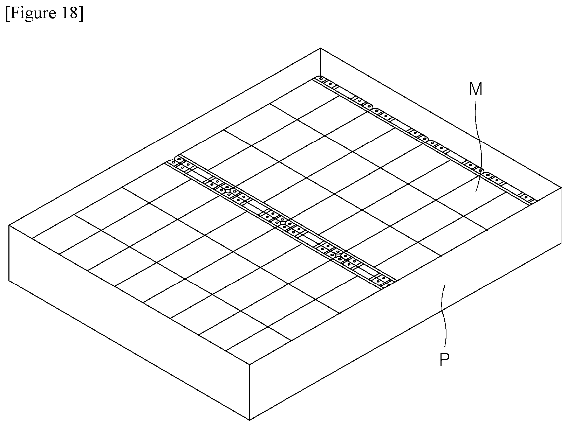

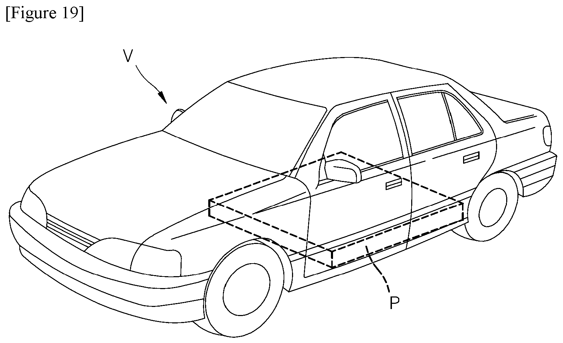

FIG. 18 is a perspective view illustrating the structure of a battery pack containing a battery module according to the present invention, and FIG. 19 is a perspective view illustrating a structure of a vehicle containing the battery pack of FIG. 18. Referring to FIGS. 18 and 19, a plurality of battery modules M may be integrated and built into a single pack frame to form a battery pack P, and the battery pack P may be built into and power the vehicle V as a power source. Since the specific structures of the battery packs and vehicles are already known to those skilled in the art, they will not be described in detail herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell laminate formed by stacking a plurality of pouch-type battery cells;
a frame having open front and rear ends, and accommodates the battery cell laminate;
a pair of end plates covering the front and rear ends of the frame; and
a flame retardant cover attached to a predetermined area of a surface of the frame,
wherein the predetermined area is divided into a plurality of areas,
the flame retardant cover comprises a plurality of divided covers attached to cover the plurality of areas, respectively, and
the frame comprises: an upper surface having two or more divided covers attached thereto; and two side surfaces having two or more divided covers attached thereto, respectively.

2. The battery module of claim 1, wherein the flame retardant cover comprises a material with flame retardant and insulating properties.

3. The battery module of claim 1, wherein the flame retardant cover comprises a flexible body.

4. The battery module of claim 1, wherein the frame comprises: a U frame with the open front and rear ends and an open upper end; and a top plate covering the upper end of the U frame.

5. The battery module of claim 4, wherein each of the plurality of areas includes a plurality of divided edge areas, respectively, provided over a portion of a surface of the U frame and a portion of a surface of the top plate, and
the plurality of divided covers comprises a plurality of divided edge covers attached to the plurality of divided edge areas, respectively.

6. The battery module of claim 5, wherein two widthwise boundaries between the U frame and the top plate are covered by the plurality of divided edge covers over an entire length thereof.

7. The battery module of claim 1, wherein the frame includes a venting hole connecting inside and outside of the frame, and
the predetermined area comprises an area where the venting hole is provided.

8. The battery module of claim 7, wherein the plurality of areas includes a plurality of divided hole areas, respectively,
the venting hole is provided at one of the plurality of divided hole areas, and
the plurality of divided covers comprises a plurality of divided hole covers attached to the plurality of divided hole area, respectively.

9. The battery module of claim 8, wherein the venting holes is further provided in different divided hole areas.

10. A battery module comprising:
a battery cell laminate formed by stacking a plurality of pouch-type battery cells;
a frame having open front and rear ends, and accommodates the battery cell laminate;
a pair of end plates covering the front and rear ends of the frame; and
a flame retardant cover attached to a predetermined area of a surface of the frame,
wherein the predetermined area is divided into a plurality of areas,
the flame retardant cover comprises a plurality of divided covers attached to cover the plurality of areas, respectively,
the frame includes a venting hole connecting inside and outside of the frame,
the plurality of areas includes a plurality of divided hole areas, respectively,
the venting holes is provided in different divided hole areas. and
the plurality of divided covers comprises a plurality of divided hole covers attached to the plurality of divided hole areas, respectively.

11. The battery module of claim 10, wherein the flame retardant cover comprises a material with flame retardant and insulating properties.

12. The battery module of claim 10, wherein the flame retardant cover comprises a flexible body.

13. The battery module of claim 10, wherein the predetermined area comprises a portion of an upper surface and two side surfaces of the frame.

14. The battery module of claim 13, wherein two or more divided covers are attached to the upper surface and two side surfaces of the frame, respectively.

15. The battery module of claim 13, wherein the frame comprises: a U frame with the open front and rear ends and an open upper end; and a top plate covering the upper end of the U frame.

16. The battery module of claim 15, wherein each of the plurality of areas includes a plurality of divided edge areas, respectively, provided over a portion of a surface of the U frame and a portion of a surface of the top plate, and
the plurality of divided covers comprises a plurality of divided edge covers attached to the plurality of divided edge areas, respectively.

17. The battery module of claim 16, wherein two widthwise boundaries between the U frame and the top plate are covered by the plurality of divided edge covers over an entire length thereof.

18. A battery pack comprising a battery module of any one of claims 1 to 17.

19. A vehicle comprising a battery pack of claim 18.
